# EUROPÄISCHE PATENTANMELDUNG

(11) **EP 3 514 925 A1**
(43) Veröffentlichungstag der Anmeldung: **24.07.2019**
(21) Anmeldenummer: 18152368.9
(22) Anmeldetag: 18.01.2018
(51) Int. Cl.: H02K 15/02, B32B 15/01, H01F 41/02

(54) **VERFAHREN ZUM VERBINDEN VON BLECHTEILEN ZU BLECHPAKETEN**

(71) Anmelder: voestalpine Automotive Components Dettingen GmbH & Co. KG, 72581 Dettingen an der Erms (DE)
(72) Erfinder: Lanksweirt, Jochen, 89522 Heidenheim (DE); Nann, Axel, 70193-Stuttgart (DE)
(74) Vertreter: Jell, Friedrich

(57) **Zusammenfassung**

Es wird ein Verfahren zum Verbinden von Blechteilen (2, 2.1, 2.2) zu Blechpaketen (3, 30) gezeigt. Um eine vielseitige Anwendbarkeit der Blechpakete sicherzustellen, wird vorgeschlagen, dass im ersten und in einem zweiten Teilbereich (5.1, 5.2) am Elektroband (5) erste Aussparungen (22.1) ident eingestanzt werden, dass im zweiten Teilbereich (5.2) entsprechend der Anzahl an Abstandshaltern (20) zusätzliche zweite Aussparungen (22.2) eingestanzt werden, welche zweiten Aussparungen (22.2) zur Aufnahme der Abstandshalter (20) ausgebildet sind, und dass ein aus dem zweiten Teilbereich (5.2) freigestanztes zweites Blechteil (2.2) entweder vor oder nach dem ersten Blechteil (2.1) derart gestapelt wird, dass bei an dieses zweite Blechteil (2.2) anliegenden Abstandshaltern (20) des ersten Blechteils (2.1) die zweiten Aussparungen (22.2) zu diesen Abstandshaltern (20) versetzt angeordnet sind.

## Beschreibung

Die Erfindung betrifft ein Verfahren zum Verbinden von Blechteilen nach dem Oberbegriff des Anspruches 1.

Um Blechpakete, welche eine Stapeleinrichtung eines Folgestanzwerkzeugs verlassen, voneinander lösen bzw. trennen zu können, ist nach dem Oberbegriff des Anspruchs 1 aus dem Stand der Technik bekannt (WO 2017/159926 A1), an einem endseitigen Blechteil eines jeden Blechpakets mehrere vorkragende Abstandshalter an einer Flachseite vorzusehen. Diese Abstandshalter werden vor dem Freistanzen des endseitigen Blechteils, das mehrere ausgestanzte Aussparungen aufweist, in einem ersten Teilbereich durch Hohlprägen erzeugt. Durch solche vorkragenden Abstandshalter reduziert sich die Kontaktfläche zwischen den Blechteilen bzw. Blechpaketen in der Stapeleinrichtung - was die Festigkeit der stoffschlüssigen Verbindung bzw. Klebstoffverbindung zwischen den Blechpaketen nach der Aktivierung der Klebstoffschicht schwächt. Zwar erleichtern Abstandshalter dieses Stands der Technik das Lösen bzw. Trennen der Blechpakete voneinander, sie schränken aber die Anwendungsmöglichkeit der Blechpakete ein - dies unter anderem deshalb, weil derartige Abstandshalter den Anteil an magnetisch leitendem Material im Bauteil reduzieren. Dies ist besonders relevant, wenn mehrere solcher Blechpakete zu einem Bauteil zusammengefügt werden.

Aus diesem Grunde schlägt die WO 2016/0035959 A1 vor, nur an jenen Teilbereichen des Elektrobands Klebstoff vorzusehen, welche nach ihrem Abtrennen auch Blechteilen des jeweiligen Blechpakets zugehören. Auf ein Vorsehen von Klebstoff zwischen Blechteilen unterschiedlicher Blechpakete wird verzichtet - was ein Verkleben der Blechpakete in der Stapeleinrichtung vermeidet. Nachteilig bedarf es für die Reproduzierbarkeit des Verfahrens einer vergleichsweise aufwendigen Steuerung/Regelung - etwa, um eine Beeinträchtigung der Funktion des Folgestanzwerkzeugs durch, sich vom Elektroband ablösenden Klebstoff zu vermeiden.

Die Erfindung hat sich daher die Aufgabe gestellt, ein Verfahren zum Verbinden von Blechteilen zu einem Blechpaket bereitzustellen, das sich durch einfache Handhabung auszeichnet, dennoch die damit hergestellten Blechpakete sich in ihrer Anwendungsmöglichkeit nicht einschränken.

Die Erfindung löst die gestellte Aufgabe durch die Merkmale des Anspruchs 1.

Werden im ersten und in einem zweiten Teilbereich am Elektroband erste Aussparungen ident eingestanzt und im zweiten Teilbereich entsprechend der Anzahl an Abstandshaltern zusätzliche zweite Aussparungen eingestanzt, welche zweiten Aussparungen zur Aufnahme der Abstandshalter ausgebildet sind, können Blechpakete für eine eventuell gewünschte Aufnahme von Abstandshaltern anderer Blechpakete vorbereitet werden. Die erfindungsgemäßen Blechpakete weisen nämlich jeweils endseitig gegenüberliegend entweder Abstandshalter oder zweite Aussparungen auf. Damit kann erreicht werden, dass die Abstandshalter bei einem Zusammenfügen von mehreren Blechpaketen zu einem Bauteil diese nicht zwangsweise voneinander beabstandet sind - wodurch eine Beschränkung der Anwendungsmöglichkeit solcher Blechpakete mit endseitigen Abstandshaltern nicht in Kauf genommen werden muss. Vorzugsweise sind hierfür die Abstandshalter gleich ausgebildet. Dies kann die die Handhabung des Verfahrens weiter erleichtern.
Damit die Abstandshalter am ersten Blechteil trotz der Aussparungen am zweiten Blechteil ein Lösen der gestapelten und verklebten Blechteile in Blechpakete weiterhin erleichtern können, wird ein aus dem zweiten Teilbereich freigestanztes zweites Blechteil entweder vor oder nach dem ersten Blechteil derart gestapelt, dass bei an dieses zweite Blechteil anliegenden Abstandshaltern des ersten Blechteils die zweiten Aussparungen zu diesen Abstandshaltern versetzt angeordnet sind. Damit kann beispielsweise eine vollflächige Verklebung des ersten Blechteils mit dem zweiten Blechteil vermieden werden bzw. ergibt sich damit eine geschwächte Verbindung zwischen diesen Blechpaketen. Die Blechpakete selbst werden also dicht gepackt und deren Blechteile vollflächig, also besonders standfest, miteinander verbunden.
Das erfindungsgemäße Verfahren kann daher zusätzlich zur vergleichsweise vielseitigen Anwendungsmöglichkeit der zur Verfügung gestellten Blechpakete auch eine hohe Reproduzierbarkeit aufweisen.

Der Steuer/Regelungsaufwand im Verfahren kann weiter reduziert werden, wenn sich der zweite Teilbereich unmittelbar vor oder nach dem ersten Teilbereich am Elektroband befindet. Beispielsweise kann damit auf besondere Maßnahmen zur Taktung des Stanzwerkzeugs, beispielsweise Folgestanzwerkzeugs, verzichtet werden, was die Reproduzierbarkeit des Verfahrens weiter erhöhen kann.

Vorzugsweise sind die zweiten Aussparungen komplementär zu den Abstandshaltern ausgebildet, was den Verfahrensaufwand zur Einbringung vermindert, insbesondere weil damit zur Erzeugung der Aussparungen und Abstandshalter dieselbe Einrichtung verwendet werden kann.

Sind bei gestapeltem ersten und zweiten Blechteil die zweiten Aussparungen zu den Abstandshaltern winkelversetzt angeordnet, kann ein Einfahren der Abstandshalter in die Aussparungen sicher verhindert werden, wenn die Blechteile gestapelt werden. Die Reproduzierbarkeit des Verfahrens kann sich damit weiter erhöhen.

Die Handhabbarkeit des Verfahrens kann - unter Beibehaltung der vorstehenden Vorteile - erleichtert werden, wenn zur Winkelversetzung die gestapelten Blechteile verdreht werden. Außerdem kann sich durch dieses Verdrehen eine konstruktive Vereinfachung an der Vorrichtung ergeben, weil beispielsweise die Abstandshalter und die Aussparungen von derselben Einrichtung erzeugt werden können. So kann die Einrichtung für die Aussparungen entsprechend - im Vergleich zum Erzeugung der Abstandshalter - tiefer in das Elektroband eingedrückt werden. Zudem kann durch die Verwendung von nur einer Einrichtung zur Herstellung der Abstandshalter und der Aussparungen die Zuverlässigkeit des Verfahrens bzw. damit dessen Reproduzierbarkeit weiter erhöhen.

Je nach vergebener Höhe der Abstandshalter kann das Verfahren funktional erweitert werden, wenn am Elektroband nacheinander eine derartige Anzahl zweiter Teilbereiche vorgesehen wird, dass bei gestapelten Blechteilen die zweiten Aussparungen zur vollständigen Aufnahme der Abstandshalter des ersten Blechteils ausgebildet sind.

Beispielsweise kann es ausreichend für eine vollständige Aufnahme der Abstandshalter eines Blechpakets in den Aussparungen eines anderen Blechpakets sein, wenn nacheinander maximal drei zweite Teilbereiche am Elektroband vorgesehen werden.

Werden die Abstandshalter in ihrer Breite auf mindestens Beschichtungshöhe (hk) der Klebstoffschicht hohlgeprägt, kann die Beeinträchtigung des Blechpakets hinsichtlich magnetischer Parameter gering bleiben. Vorzugsweise werden die Abstandshalter in ihrer Breite auf mindestens Blechstärke des Elektrobands hohlgeprägt, um ein mechanisch belastbares Trennelement zu schaffen bzw., um die gestapelten Blechpakete standfest auf Abstand zu halten. Dies kann die Reproduzierbarkeit des Verfahrens weiter verbessern.

Beträgt die Breite der Abstandshalter mindestens 1 mm, kann dies zu ausreichender mechanischer Belastbarkeit des Trennelements führen. Dies insbesondere dann, wenn die Breite der Abstandshalter mindestens 1,5 mm ist.

Als ausreichend kann sich zudem herausstellen, wenn die Breite der Abstandshalter maximal das Fünffache der Blechstärke des Elektrobands beträgt.

Das Lösen der Blechpakete voneinander kann auf reproduzierbarere Weise erfolgen, wenn die Abstandshalter in ihrer Höhe auf mindestens Beschichtungshöhe der Klebstoffschicht hohlgeprägt werden. Damit kann beispielsweise ein ausreichender Abstand zwischen der Klebstoffbeschichtung und eines endseitigen Blechteils sichergestellt werden.
Beträgt die Höhe der Abstandshalter mindestens die doppelte Beschichtungshöhe der Klebstoffschicht, kann das Trennen der Blechpakete weiter erleichtert werden. Dies auch dann, wenn das Elektroblech beidseitig mit einer Klebstoffschicht beschichtet ist.

Vorzugsweise beträgt die Höhe der Abstandshalter maximal das Dreifache der Blechstärke des Elektrobands, um so für einen ausreichenden Abstand bei hoher Stapeldichte sorgen zu können. Als ausreichend kann sich herausstellen, wenn die Höhe der Abstandshalter der Blechstärke des Elektrobands entspricht.

Entspricht der seitliche Abstand zwischen zwei nacheinander folgenden Abstandshaltern mindestens der geringsten Breite dieser Abstandshalter, kann die mechanischen Steifigkeit des Trennelements unterstützt und dessen Standfestigkeit weiter erhöht werden. Derart wird die Reproduzierbarkeit des Verfahrens zusätzlich verbessert.

Das Lösen bzw. Trennen der Blechpakete kann weiter erleichtert werden, wenn der Abstandshalter im Querschnitt eine trapez-, halbrund- oder rechteckförmige Kontur aufweist. Eine halbrunde Kontur kann sich dabei besonders auszeichnen - etwa, um auch Beschädigungen an angrenzende Blechpakete verlässlich zu vermeiden. Derart ist die die Reproduzierbarkeit des Verfahrens weiter zu erhöhen.

Werden die gestapelten Blechteile durch Aktivierung der Klebstoffschicht zu mehreren Blechpaketen verklebt, kann dies zu einer besonders belastbaren stoffschlüssigen Verbindung zwischen den Blechteilen und damit zu standfesten Blechpaketen führen - welche Blechpakete mithilfe des Trennelements aber trotzdem reproduzierbar voneinander lösbar sind. Eine, insbesondere thermische, Aktivierung der Klebstoffschicht ist vergleichsweise einfach handhabbar. Vorstellbar ist auch, die Klebstoffschicht mit einem Aktivator, Beschleuniger etc. chemisch zu aktivieren.

Werden vor dem Freistanzen des ersten Blechteils Kopfabschnitte der Abstandshalter abgetrennt, kann ein reduzierender Einfluss auf die Klebeneigung der Abstandshalter erreicht werden - womit die Trennung in Blechpakete weiter zu erleichtern ist.

In den Figuren ist beispielsweise der Erfindungsgegenstand anhand mehrerer Ausführungsvarianten dargestellt. Es zeigen
- Fig. 1: eine schematische Ansicht auf eine Vorrichtung zum Herstellen von Blechpaketen,
- Fig. 2: eine vergrößerte Teilansicht auf die letzte Stanzstufe nach Fig. 1 vor einem Freistanzen eines ersten Blechteils nach einer ersten Ausführungsvariante und
- Fig. 3: eine Ansicht auf ein Blechpaket nach einem zweiten Ausführungsbeispiel, hergestellt durch das erfindungsgemäße Verfahren.

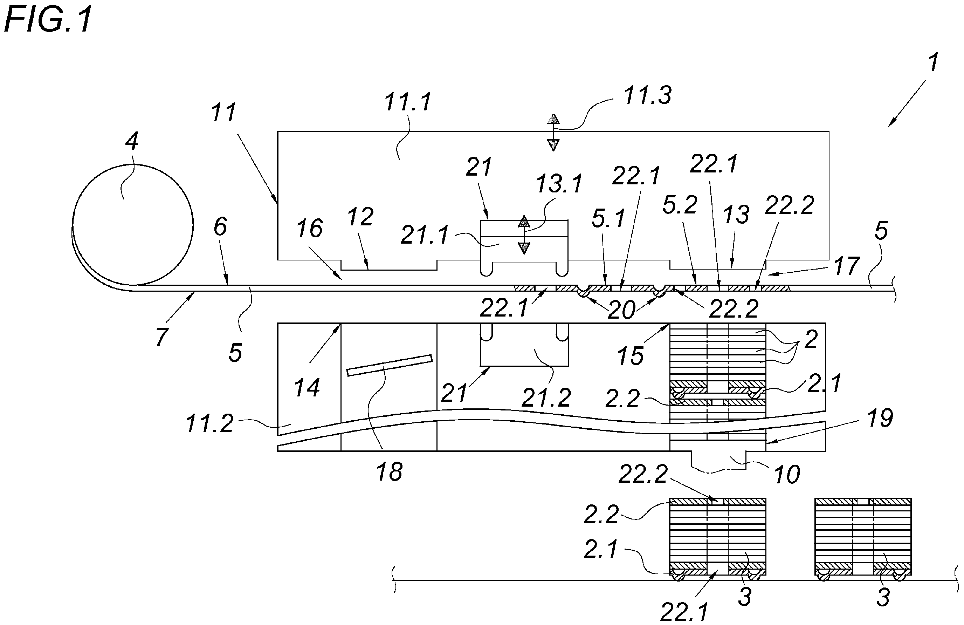

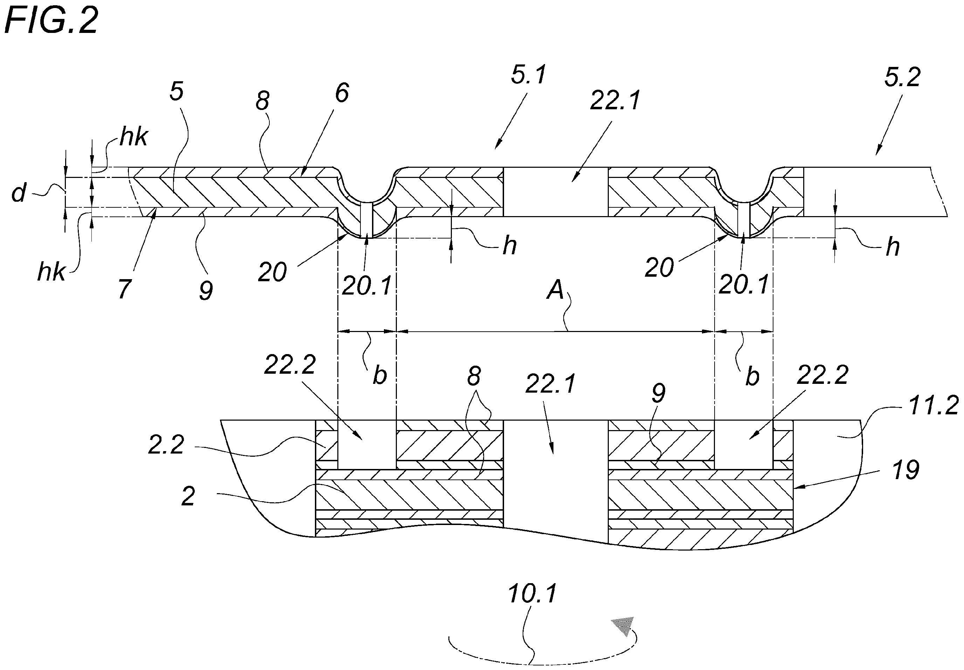

Gemäß dem Ausführungsbeispiel nach Fig. 1 wird eine Vorrichtung 1 zur Durchführung des erfindungsgemäßen Verfahrens schematisch dargestellt. Diese Vorrichtung 1 dient dem Paketieren von freigestanzten Blechteilen 2, 2.1, 2.2 zu Blechpaketen 3, 30. Hierzu wird von einem Coil 4 ein Elektroband 5 abgehaspelt, welches auf einer oder beiden seiner Flachseiten 6, 7 eine vollflächige Klebstoffschicht 8, 9, nämlich heißhärtende Schmelzklebstoffschichten, aufweist - welche Klebstoffschichten 8, 9 in der Fig. 2 dargestellt sind.

Vom beidseitig klebstoffbeschichteten Elektroband 5 werden mithilfe eines Stanzwerkzeugs 11 mehrere Blechteile 2, 2.1, 2.2 freigestanzt. Solch ein Freistanzten kann - im Allgemeinen erwähnt - ein Ausschneiden, Abschneiden, Ausklinken, Beschneiden, Zerteilen durch Ausdrücken etc. sein.

Wie der Fig. 1 weiter zu entnehmen, führt das Stanzwerkzeug 11, beispielsweise hier ein Folgestanzwerkzeug, ein Schneiden mit mehreren Hüben 11.3 durch, indem sein Oberwerkzeug 11.1 mit seinem Unterwerkzeug 11.2 zusammenwirkt. Mit einer ersten Schneide 12 des Oberwerkzeugs 11.1 wird das Elektroband 5 für ein Freistanzen vorbearbeitet, wonach mit einer zweiten Schneide 13 des Oberwerkzeugs 11.1 aus dem Elektroband 5 das Blechteil 2 freigestanzt bzw. damit vereinzelt wird. Solch ein Freigestanzten kann - beispielhaft erwähnt - ein Ausschneiden, Abschneiden, Ausklinken, Beschneiden, Zerteilen durch Ausdrücken etc. sein.

Die Schneiden 12, 13 wirken mit den jeweiligen Matrizen 14, 15 des Unterwerkzeugs 11.2 zusammen und bilden damit im Stanzwerkzeug 10 zwei Stanzstufen 16, 17 aus.

Solch ein Folgeschneiden ist in der Fig. 1 daran zu erkennen, dass beim Vorbearbeiten ein Teil 18 vom Elektroband 5 abgetrennt wird, um das Elektroband 5 für das Freistanzen der Blechteile 2, 2.1, 2.2 vorzubereiten. Durch das ausgestanzte Teil 18 werden am Elektroband 5 Aussparungen für alle Blechteile 2, 2.1, 2.2 erzeugt, nämlich erste Aussparungen 22.1. Diese in weiter Folge an jedem Blechpaket 3 vorhandenen ersten Aussparungen 22.1 dienen beispielsweise als Magnettaschen oder zur Aufnahme einer Wellenachse etc. oder werden beispielsweise zur Erhöhung eines magnetischen Widerstands am Blechpaket eingebracht.

Danach werden mithilfe der Stanzstufe 17 die Blechteile 2, 2.1, 2.2 freigestanzt und durch Druck des Oberwerkzeugs 11.1 in eine Stapeleinrichtung 19 gedrängt bzw. dort gestapelt. Hierzu weist die Stapeleinrichtung 19 eine Führung im Unterwerkzeug 11.2 auf. Auch ist ein nicht näher dargestellter Gegenhalter 10 in der Führung vorgesehen. Der Gegenhalter 10 übt eine Haltekraft auf die Blechteile 2 aus, wodurch die Blechteile 2 unter dem Druck des Oberwerkzeugs 11.1 und mithilfe der zwischen den Blechteilen 2 vorhandenen Klebstoffschicht 8, 9 eine physikalische Verbindung eingehen. Die Stapeleinrichtung 19 kann aktiv beheizt werden, um den Klebstoff zu aktivieren und zwischen den Blechteilen 2 eine Klebstoffverbindung bzw. stoffschlüssige Verbindung herzustellen - was nicht weiter dargestellt ist.

Um die, die Stapeleinrichtung 19 verlassenden Blechpakete 3 leichter voneinander trennen zu können, wird das Elektroband 5 auf der ersten Flachseite 7 in einem ersten Teilbereich 5.1 durch Hohlprägen mehrerer vorkragender und gleich ausgebildeter Abstandshalter 20 vorbereitet - und zwar vor dem Freistanzen der Blechteile 2. Damit wird nach dem Freistanzen des ersten Blechteils 2.1 der Blechteile 2 aus diesem ersten Teilbereich 5.1 ein Lösen der gestapelten und verklebten Blechteile 2, 2.1, 2.2 in Blechpakete 3 möglich - wie dies beispielsweise in Fig. 2 erkannt werden kann. Durch die Abstandshalter 20 vermindert sich nämlich die Kontaktfläche der Klebstoffschichten 8, 9, wodurch sich das voneinander Lösen bzw. Trennen der Blechpakete 3 nach dem Verlassen der Stapeleinrichtung 19 erheblich erleichtert. Diese Vorbereitung des ersten Teilbereichs 5.1 erfolgt durch eine Einrichtung 21 mit einem Stempel 21.1 und mit einer damit zusammenwirkenden Matrize 21.2, mit der das Elektroband 5 hohlgeprägt wird. Der Stempel 21.1 ist im Oberwerkzeug 11.1 entlang einer Linearführung 13.1 vor- und zurückbewegbar, und kann damit je nach Bedarf eingesetzt werden, das Elektroband 5 vorzubereiten.

Erfindungsgemäß bereitet diese Einrichtung 21 das Elektroband 5 auch in einem zweiten Teilbereich 5.2 vor, und zwar im Ausführungsbeispiel unmittelbar vor dem ersten Teilbereich 5.1 - siehe hierzu Fig. 1. Dazu dringt der Stempel 21.1 lediglich tiefer das Elektroband 5 ein. In diesem zweiten Teilbereich 5.2 werden entsprechend der Anzahl an Abstandshaltern 20 des ersten Teilbereichs 5.1 zu den ersten Aussparungen 22.1 zweite Aussparungen 22.2 eingestanzt. Diese Aussparungen 22.2 sind zusätzlich zu den ersten Aussparungen 22.1, die in den ersten und zweiten Teilbereich 5.1, 5.2 am Elektroband 5 ident eingestanzt sind. Im Ausführungsbeispiel sind diese ersten Aussparungen 22.1 an allen freigestanzten Blechteilen 2, 2.1, 2.2 ident vorhanden.

Diese zweiten Aussparungen 22.2 sind zur Aufnahme der Abstandshalter 20 ausgebildet. Damit können die Abstandshalter 20 in den jeweiligen Aussparungen 22.2 mit Spiel fluchten, wie dies anhand des vom zweiten Teilbereich 5.2 freigestanzten zweiten Blechteils 2.2 in der Stapeleinrichtung 19 zu erkennen ist. Vorzugsweise sind diese zweiten Aussparungen 22.2 komplementär zu den Abstandshaltern 20 ausgebildet.

Die Abstandshalter 20 und zweiten Aussparungen 22.2 beeinträchtigen jedoch nicht das Lösen der gestapelten und miteinander verklebten Blechteile 2, 2.1, 2.2 in Blechpakete 3. Der Gegenhalter 10 bewegt nämlich in Drehrichtung 10.1 bzw. verdreht die gestapelten Blechteile 2, 2.1, 2.2, bevor ein jeweiliges erstes Blechteil 2.1 auf ein bereits in der Stapeleinrichtung 19 vorgesehenes zweites Blechteil 2.2 vorgesehen wird. Damit ist gewährleistet, dass die zweiten Aussparungen 22.2 des zweiten Blechteils 2.2 zu den am zweiten Blechteil 2.2 anliegenden Abstandshaltern 20 des ersten Blechteils 2.1 winkelversetzt angeordnet sind.

Zwar weisen die Blechpakete 3 damit an einem Ende 3.1 je ein erstes Blechteil 2.1 mit vorkragenden Abstandshaltern 20 auf, besitzen aber auch am gegenüberliegenden Ende 3.2 zweite Aussparungen 22.2 am zweiten Blechteil 2.2. Damit können diese Blechteile Abstandshalter anderer Blechpakete 3 aufnehmen - sofern dies gewünscht ist - und so einen Abstand zwischen Blechteilen 2, 2.1, 2.2 vermeiden. Die erfindungsgemäßen Blechpakete 3 sind daher trotz Abstandshalter 20 für alle Anwendungen geeignet, also äußerst variabel einsetzbar.

Die Abstandshalter 20.1, 20.2 weisen im Querschnitt eine halbrundförmige Kontur auf und kragen in Form eines Kugelsegments der Flachseite 7 des Elektrobands 5 bzw. des ersten Blechteils 10 vor. Die Form eines Kugelsegments bewährt sich unter anderem, um die Oberfläche der Blechteile 2, 2.2 zu schonen. Dementsprechend sind die komplementären zweiten Aussparungen 22.2 als kreisrunde Löcher ausgebildet.

Die Abstandshalter 20 weisen eine Breite b und eine Höhe h auf - bzw. werden diese derart durch Hohlprägen erzeugt. Anhand dieser Höhe h kann beispielsweise ein ausreichender Abstand zwischen der Klebstoffbeschichtung und eines endseitigen Blechteils 2 sichergestellt werden. Anhand der Breite b kann für eine ausreichende mechanische Belastbarkeit der Abstandshalter 20 beim Stapeln der Blechteile 2, 2.1, 2.2 gesorgt werden. Der Abstand A zwischen nebeneinanderliegenden Abstandshaltern 20 entspricht mindestens der geringsten Breite b dieser Abstandshalter 20.

Das Elektroband 5 weist beispielsweise eine Blechstärke von 0,1 bis 1 mm, nämlich 0,7 mm, auf. Die Schichthöhe hk der Klebstoffschichten 8, 9 beträgt 2 bis 4 µm. Eine verfahrenstechnisch einfache Trennung in Blechpakete 3 wird erreicht, wenn die Abstandshalter 20 eine Breite b von 1,5 mm und eine Höhe h von 0,7 mm aufweisen.

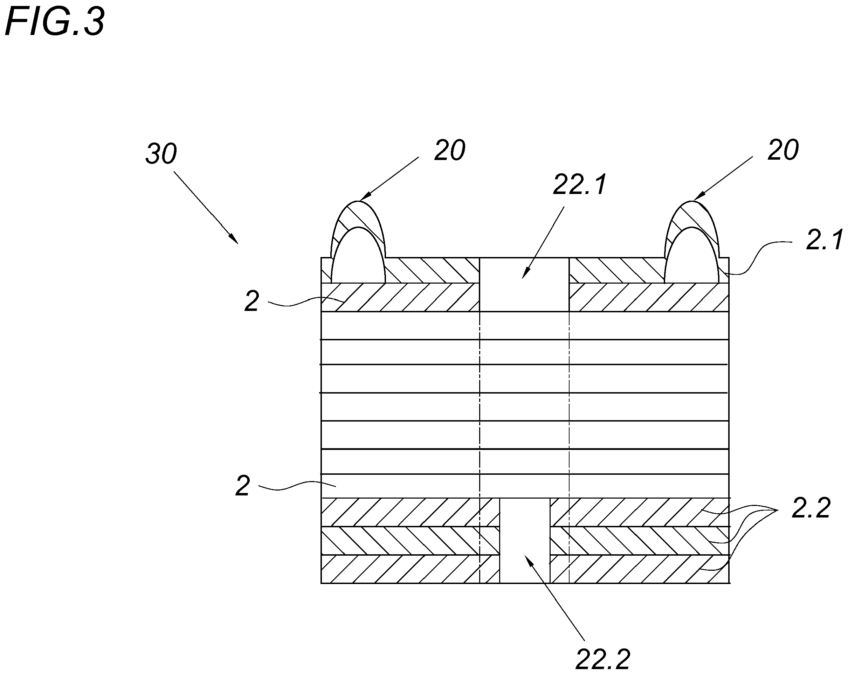

Nach Fig. 3 ist ein weiteres Blechpaket 30 nach einem anderen Ausführungsbeispiel dargestellt.
Hier entspricht die Höhe h der Abstandshalter 20 ungefähr der doppelten Blechdicke d. Dementsprechend werden nacheinander in das Elektroband 5 drei zweite Teilbereiche 5.2 mit zweiten Ausnehmungen 22.2 vorgesehen, um am Blechpaket 30 aneinander anschließende Aussparungen 22.2 zu schaffen, die zur vollständigen Aufnahme der Abstandshalter 22 des ersten Blechteils 2.1 ausgebildet sind.

In das Elektroband 4 wird daher nacheinander eine derartige Anzahl zweiter Teilbereiche 5.2 vorgesehen, dass bei gestapelten Blechteilen 2, 2.1, 2.2 die zweiten Aussparungen 22.2 zur vollständigen Aufnahme der Abstandshalter 22 des ersten Blechteils 2.1 ausgebildet sind.

Zudem ist in Fig. 2 zu erkennen, dass vor dem Freistanzen des ersten Blechteils 2.1 alle Abstandshalter 20 einen abgetrennten Kopfabschnitt 20.1 aufweisen. Dies wird beispielsweise durch Lochen des Elektrobands 5 vor, während oder nach dem Hohlprägen der Abstandshalter 20 durchgeführt. Vorzugsweise wird der Abstandshalter 20 gelocht, um dessen Kopfabschnitt 20.1 abzutrennen.

Damit kann die aktivierbare Klebstoffschicht 8, 9 an den diesbezüglichen Abstandshaltern 20 - beispielsweise verfahrenstechnisch einfach gelöst - reduziert werden, was das Trennen der Blechpakete 3 weiter erleichtert.

## Patentansprüche

1. Verfahren zum Verbinden von Blechteilen (2, 2.1, 2.2) zu Blechpaketen (3, 30), bei dem
in ein, an zumindest einer seiner Flachseiten (6, 7) mit einer aktivierbaren Klebstoffschicht (8, 9), insbesondere Schmelzklebelackschicht, beschichteten Elektroband (5) Aussparungen (22.1, 22.2) eingestanzt werden,
Blechteile (2, 2.1, 2.2) mit diesen eingestanzten Aussparungen (22.1, 22.2) vom Elektroband (5) freigestanzt werden und
die freigestanzten Blechteile (2, 2.1, 2.2) gestapelt und zu Blechpaketen (3, 30) verklebt werden, wobei
vor dem Freistanzen von Blechteilen (2, 2.1, 2.2) das Elektroband (5) in einem ersten Teilbereich (5.1) hohlgeprägt wird, wodurch mehrere auf einer Flachseite (6, 7) des Elektrobands (5) vorkragende Abstandshalter (20) erzeugt werden, aus diesem ersten Teilbereich (5.1) ein erstes Blechteil (2.1) freigestanzt wird und nach dem Freistanzen dieses ersten Blechteils (2.1) mithilfe dessen Abstandshalter (20) beim Stapeln ein zweites Blechteil (2.2) vom ersten Blechteil (2.1) beabstandet wird, um das Lösen der gestapelten und verklebten Blechteile (2, 2.1, 2.2) in Blechpakete (3, 30) zu erleichtern,
**dadurch gekennzeichnet, dass**
im ersten und in einem zweiten Teilbereich (5.1, 5.2) am Elektroband (5) erste Aussparungen (22.1) ident eingestanzt werden, dass
im zweiten Teilbereich (5.2) entsprechend der Anzahl an Abstandshaltern (20) zusätzliche zweite Aussparungen (22.2) eingestanzt werden, welche zweiten Aussparungen (22.2) zur Aufnahme der Abstandshalter (20) ausgebildet sind, und dass
ein aus dem zweiten Teilbereich (5.2) freigestanztes zweites Blechteil (2.2) entweder vor oder nach dem ersten Blechteil (2.1) derart gestapelt wird, dass bei an dieses zweite Blechteil (2.2) anliegenden Abstandshaltern (20) des ersten Blechteils (2.1) die zweiten Aussparungen (22.2) zu diesen Abstandshaltern (20) versetzt angeordnet sind.

2. Verfahren nach Anspruch 1, **dadurch gekennzeichnet, dass** sich der zweite Teilbereich (5.2) unmittelbar vor oder nach dem ersten Teilbereich (5.1) am Elektroband (5) befindet.

3. Verfahren nach Anspruch 1 oder 2, **dadurch gekennzeichnet, dass** die zweiten Aussparungen (22.2) komplementär zu den Abstandshaltern (20) ausgebildet sind.

4. Verfahren nach einem der Ansprüche 1 bis 3, **dadurch gekennzeichnet, dass** bei gestapeltem ersten und zweiten Blechteil (2.1, 2.2) die zweiten Aussparungen (22.2) zu den Abstandshaltern (20) winkelversetzt angeordnet sind.

5. Verfahren nach Anspruch 4, **dadurch gekennzeichnet, dass** zur Winkelversetzung die gestapelten Blechteile (2, 2.1, 2.2) verdreht werden.

6. Verfahren nach einem der Ansprüche 1 bis 5, **dadurch gekennzeichnet, dass** am Elektroband (4) nacheinander eine derartige Anzahl zweiter Teilbereiche (5.2) vorgesehen wird, dass bei gestapelten Blechteilen (2, 2.1,2.2) die zweiten Aussparungen (22.2) zur vollständigen Aufnahme der Abstandshalter (22) des ersten Blechteils (2.1) ausgebildet sind.

7. Verfahren nach einem der Ansprüche 1 bis 6, **dadurch gekennzeichnet, dass** nacheinander maximal drei zweite Teilbereiche (5.2) am Elektroband (4) vorgesehen werden.

8. Verfahren nach einem der Ansprüche 1 bis 7, **dadurch gekennzeichnet, dass** die Abstandshalter (20) in ihrer Breite (b) auf mindestens Beschichtungshöhe (hk) der Klebstoffschicht (8, 9), insbesondere auf mindestens Blechstärke (d) des Elektrobands (5), hohlgeprägt werden.

9. Verfahren nach Anspruch 8, **dadurch gekennzeichnet, dass** die Breite (b) der Abstandshalter (20) mindestens 1 mm, insbesondere mindestens 1,5mm, beträgt.

10. Verfahren nach Anspruch 8 oder 9, **dadurch gekennzeichnet, dass** die Breite (b) der Abstandshalter (20) maximal das Fünffache der Blechstärke (d) des Elektrobands (5) beträgt.

11. Verfahren nach einem der Ansprüche 1 bis 10, **dadurch gekennzeichnet, dass** die Abstandshalter (20) in ihrer Höhe (h) auf mindestens, insbesondere auf mindestens die doppelte, Beschichtungshöhe (hk) der Klebstoffschicht (8, 9) hohlgeprägt werden.

12. Verfahren nach Anspruch 11, **dadurch gekennzeichnet, dass** die Höhe (h) der Abstandshalter (20) maximal das Dreifache der Blechstärke (d) des Elektrobands (5) beträgt, insbesondere der Blechstärke (d) des Elektrobands (5) entspricht.

13. Verfahren nach einem der Ansprüche 1 bis 12, **dadurch gekennzeichnet, dass** der seitliche Abstand (A) zwischen zwei nacheinander folgenden Abstandshaltern (20) mindestens der geringsten Breite (b) dieser Abstandshalter (20) entspricht.

14. Verfahren nach einem der Ansprüche 1 bis 13, **dadurch gekennzeichnet, dass** der Abstandshalter (20) im Querschnitt eine trapez-, halbrund- oder rechteckförmige Kontur aufweist.

15. Verfahren nach einem der Ansprüche 1 bis 14, **dadurch gekennzeichnet, dass** die gestapelten Blechteile (2, 2.1, 2.2) durch, insbesondere thermische, Aktivierung der Klebstoffschicht (8, 9) zu mehreren Blechpaketen (3, 30) verklebt werden.

16. Verfahren nach einem der Ansprüche 1 bis 15, **dadurch gekennzeichnet, dass** vor dem Freistanzen des ersten Blechteils (2.1) Kopfabschnitte (20.1) der Abstandshalter (20) abgetrennt werden.
